# EUROPÄISCHE PATENTSCHRIFT

(11) **EP 3 571 110 B1**
(45) Veröffentlichungstag und Bekanntmachung des Hinweises auf die Patenterteilung: **23.12.2020**
(21) Anmeldenummer: 18701688.6
(22) Anmeldetag: 16.01.2018
(51) Int. Cl.: B62D 1/181

(54) **ELEKTRISCH VERSTELLBARE LENKSÄULE FÜR EIN KRAFTFAHRZEUG**
ELECTRICALLY ADJUSTABLE STEERING COLUMN FOR A MOTOR VEHICLE
COLONNE DE DIRECTION À RÉGLAGE ÉLECTRIQUE CONÇUE POUR UN VÉHICULE AUTOMOBILE

(30) Priorität: 19.01.2017 DE 102017200888
(43) Veröffentlichungstag der Anmeldung: 27.11.2019
(73) Patentinhaber: thyssenkrupp Presta AG, 9492 Eschen (LI); thyssenkrupp AG, 45143 Essen (DE)
(72) Erfinder: RAICH, Thomas, 6773 Vandans (AT)
(74) Vertreter: thyssenkrupp Intellectual Property GmbH
(86) Internationale Anmeldenummer: PCT/EP2018/050971
(87) Internationale Veröffentlichungsnummer: WO 2018/134187

(56) Entgegenhaltungen:
- WO-A1-2013/178302
- US-A- 5 477 744
- US-A1- 2009 064 814

## Beschreibung

Die Erfindung betrifft eine Lenksäule für ein Kraftfahrzeug, mit einem Mantelrohr zur drehbaren Lagerung einer Lenkwelle und mit einem das Mantelrohr umgreifenden Führungsteil, in dem das Mantelrohr mit seiner äußeren Mantelfläche in Lagerflächen des Führungsteils in Richtung der Längsachse der Lenkwellen mittels eines motorischen Längsverstellantriebs teleskopisch verschiebbar gelagert ist, wobei das Führungsteil einen Schlitz aufweist, dessen Schlitzbreite mittels eines Spannbolzens auf eine wählbaren Schlitzbreite einstellbar ist, so dass ein Spiel oder eine vorgegebene Vorspannkraft zwischen der Mantelfläche und der lagernden Lagerfläche des Führungsteils eingestellt ist.

Eine derartige Lenksäule ist aus der DE 10 2012 104 644 B3 bekannt. Zur Vermeidung von Spiel zwischen einem die Lenkwelle drehbar lagernden inneren Mantelrohr und einem das Mantelrohr längsverschiebbar lagernden Führungsteil ist bei der bekannten Lenksäule ein Vorspannsystem vorgesehen, welches eine Vielzahl von Bauteilen, unter anderem Blattfedern zur elastischen Vorspannung aufweist. Nachteil dieser Lösung ist die aufwändige Montage und die hohe Zahl an Bauteilen.

Aus der US 2009/0064814 A1 ist eine Lenksäule der eingangs genannten Art bekannt. Diese ist aufwendig aufgebaut aus einer Vielzahl von Bauteilen. Diese Schrift offenbart die vorkennzeichnenden Merkmale des Anspruchs 1.

Aufgabe der Erfindung ist es, eine verbesserte elektrisch verstellbare Lenksäule bereitzustellen, bei der mit einfachen Mitteln eine spielarme Lagerung eines Mantelrohrs in einem Führungsteil möglich ist.

Die Erfindung löst diese Aufgabe durch die Merkmale des Anspruchs 1. Vorteilhafte Ausgestaltungsformen sind in den Unteransprüchen beschrieben.

Die erfindungsgemäße Lösung sieht vor, dass die Lenksäule einen motorischen Höhenverstellantrieb mit einem Schwenkhebel aufweist, der mittels einer Hebelachse am Führungsteil angelenkt ist, und dass die Hebelachse durch den Spannbolzen gebildet ist.

Wenn die Lenksäule auch über einen motorischen Höhenverstellantrieb mit einem Schwenkhebel verfügt, der mittels einer Hebelachse am Führungsteil angelenkt ist, ist es besonders vorteilhaft, wenn die Hebelachse durch den Spannbolzen gebildet ist. Auf diese Weise kann eine für den Höhenverstellantrieb ohnehin vorhandene Hebelachse gleichzeitig als Spannbolzen verwendet werden und dabei ein zusätzliches Bauteil eingespart werden.

Die Erfindung hat den Vorteil, dass lediglich ein Schlitz und ein Spannbolzen benötigt werden, um das Spiel zwischen dem Mantelrohr und Führungsteil auf ein Minimum zu reduzieren, um eine Spielpassung zwischen der Mantelfläche des Mantelrohrs und der Lagerfläche des Führungsteils oder eine vorgegebene Vorspannung zwischen dem Mantelrohr und Führungsteil bereitzustellen, so dass eine Übermaßpassung zwischen der Mantelfläche des Mantelrohrs und der zumindest einen Lagerfläche des Führungsteils vorliegt. Durch die Einstellung des Spiels oder der vorgegebenen Vorspannung zwischen dem Mantelrohr und dem Führungsteil kann die wirkende Verschiebekraft zwischen dem Mantelrohr und dem Führungsteil eingestellt werden. Unter der Verschiebekraft ist die Reibkraft zu verstehen, welche erforderlich ist, um das Mantelrohr gegenüber dem Führungsteil zu verschieben. Durch die erfindungsgemäße Einstellung des Spiels oder der vorgegebenen Vorspannung zwischen Mantelrohr und Führungsteil kann die Steifigkeit und die Eigenfrequenz der Lenksäule verbessert, d.h. gesteigert werden.

Die Schlitzbreite kann bei der Montage der Lenksäule eingestellt werden, wobei bevorzugt während des Einstellens der Schlitzbreite die Verschiebekraft gemessen wird, wobei die Einstellung der Schlitzbreite beendet wird, wenn eine vorbestimmte Verschiebekraft erreicht ist.

Mit Vorteil ist der Schlitz T-förmig oder L-förmig ausgestaltet. Hierdurch wird die Steifigkeit des Führungsteils gegenüber den angreifenden Kräften der Spannschraube beim Zuspannen des Schlitzes verringert, so dass sich die Lagerfläche des Führungsteils unter geringeren Kraftaufwand zuspannen lassen. Weiterhin kann durch einen T-förmigen oder L-förmigen Schlitz erreicht werden, so dass eine verbesserte, gleichmäßigere Anlage zwischen der Mantelfläche und der zumindest einen Lagerfläche erreicht wird. Somit kann eine Schwankung der Verschiebekraft über den Verstellweg reduziert werden.

Mit Vorteil erstreckt sich der Schlitz in Richtung der Längsachse der Lenksäule, so dass das Führungsteil das Mantelrohr wie eine Schelle umschließt.

In einer vorteilhaften Weiterbildung kann es vorgesehen sein, dass die Schlitzbreite über die Erstreckung des Schlitzes einen konstanten Wert aufweist, in einem unverspannten Zustand des Führungsteils, oder dass die Schlitzbreite über die Erstreckung des Schlitzes unterschiedliche Werte aufweist, in einem unverspannten Zustand des Führungsteils.

Eine vorteilhafte Ausgestaltung der Erfindung sieht vor, dass das Führungsteil mehrere radial nach innen vorragende Lagerflächen zur Lagerung des Mantelrohrs aufweist. Durch diese Maßnahme wird sichergestellt, dass die auf das Mantelrohr einwirkenden Lagerkräfte bzw. Vorspannkräfte an vorbestimmten Punkten oder Flächenbereichen der äußeren Mantelfläche des Mantelrohrs angreifen und nicht infolge Verformungen des Führungsteils beim Zuspannen des Schlitzes zufällig verteilt werden. Dadurch können diskrete Kontakte zwischen dem Mantelrohr und dem Führungsteil realisiert werden.

In einer vorteilhaften Weiterbildung ist der Spannbolzen als eine Spannschraube ausgebildet, wobei die Spannschraube ein Außengewinde aufweist.

Mit Vorteil sind mehrere, vorzugsweise drei oder vier Lagerflächen in Umfangsrichtung im Abstand zueinander angeordnet. Auf diese Weise werden die angreifenden Vorspannkräfte (Klemmkräfte) über den Umfang verteilt, wobei aus Symmetriegründen mit Vorteil bei vier Lagerflächen zwei Lagerflächen rechts und zwei Lagerflächen links vom Schlitz anzuordnen sind.

Weiterhin vorteilhaft ist es, dass mehrere Lagerflächen in Längsrichtung im Abstand zueinander angeordnet sind. So kann das Mantelrohr gegen Verkippen gesichert werden. Besonders vorteilhaft ist eine Ausführungsform, bei der vier in Axialrichtung relativ kurz ausgestaltete Lagerflächen in Umfangsrichtung jeweils um 90° versetzt zueinander angeordnet sind und eine zweite Gruppe von entsprechend ausgestalteten Lagerflächen im axialen Abstand angeordnet sind.

In weiterer vorteilhafter Ausgestaltung der Erfindung ist vorgesehen, dass auf dem Spannbolzen eine Hülse angeordnet ist, die sich quer über den Schlitz erstreckt, und dass zwei gegenüberliegende, den Schlitz begrenzende Flanken des Führungsteils an der Hülse abgestützt sind. Wenn im Crashfall der Fahrer auf das Lenkrad auf prallt, kann dies eine radiale Kraftkomponente zur Folge haben, die auf das Mantelrohr einwirkt und die den Schlitz begrenzenden Flanken des Führungsteils auseinander drückt, wodurch der Schlitz verbreitert wird. Durch die Abstützung der Flanken an der Hülse des Spannbolzens wird ein ungewolltes Auseinanderbiegen verhindert oder zumindest verringert.

In einer vorteilhaften Weiterbildung kann es vorgesehen sein, dass das Führungsteil eine Bohrung umfasst, durch die sich der Spannbolzen erstreckt, wobei in der Bohrung des Führungsteils eine Buchse angeordnet ist, wobei die Buchse zwischen der Bohrung und dem Spannbolzen angeordnet ist. Durch die Zwischenschaltung der Buchse zwischen dem Spannbolzen und dem Führungsteil kann die Abstützung des Spannbolzens im Führungsteil verbessert werden. Bevorzugt ist die Buchse aus Messing oder Bronze ausgebildet.

Ein Ausführungsbeispiel der Erfindung wird nachfolgend anhand der Zeichnungen näher erläutert. Die Figuren zeigen im Einzelnen:
- Figur 1:: eine perspektivische Ansicht einer erfindungsgemäßen Lenksäule im einbaufertigen Zustand;
- Figur 2:: eine Seitenansicht derselben Lenksäule;
- Figur 3:: eine perspektivische Ansicht eines Details derselben Lenksäule;

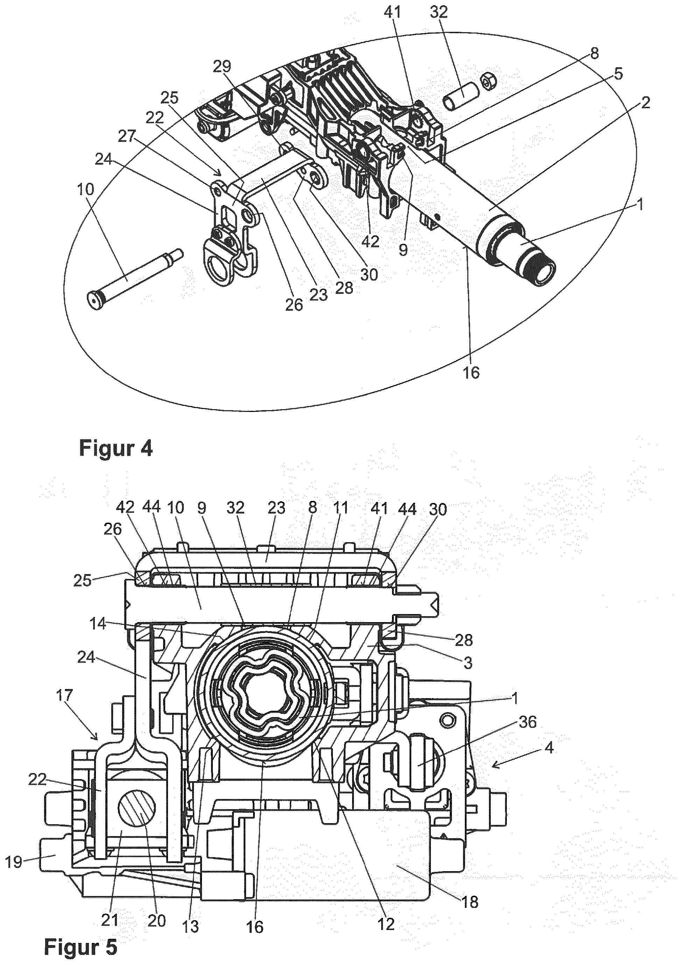

- Figur 4:: eine Teilansicht ähnlich Figur 3 der teilweise demontierten Lenksäule;
- Figur 5:: eine quer zur Längsachse der erfindungsgemäßen Lenksäule geschnittene Darstellung durch den Spannbolzen;

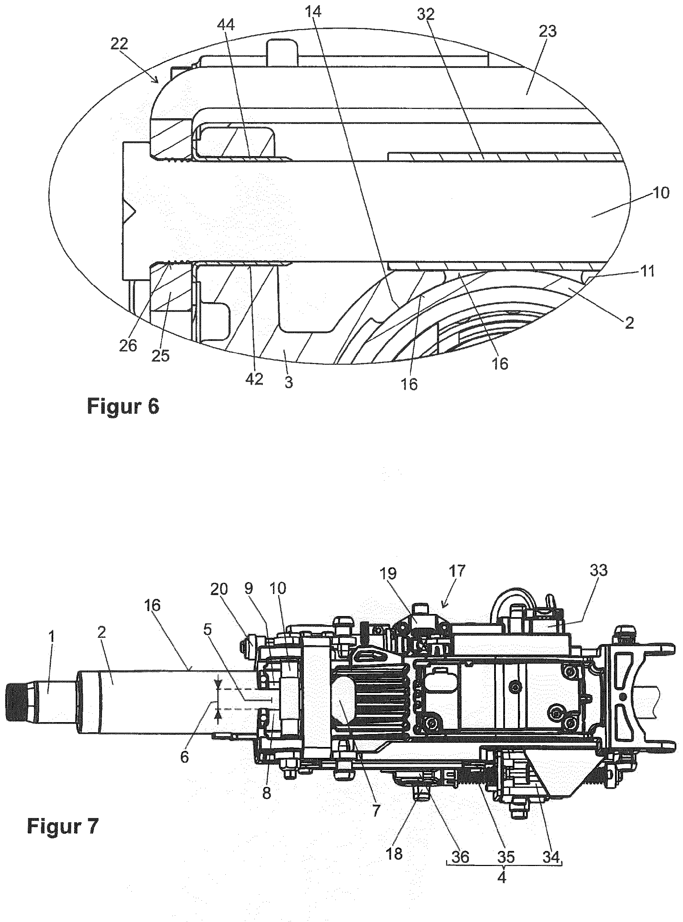

- Figur 6:: ein vergrößertes Detail aus Figur 5;
- Figur 7:: eine Draufsicht auf die erfindungsgemäße Lenksäule;
- Figur 8:: eine Draufsicht ähnlich Figur 7, in einer auseinander gezogenen Darstellung;
- Figur 9:: eine perspektivische Darstellung eines Führungsteils der Lenksäule.

Eine elektrisch verstellbare Lenksäule für ein Kraftfahrzeug umfasst eine Lenkwelle 1, die um eine Längsachse 31 drehbar in einem Mantelrohr 2 gelagert ist. Das Mantelrohr 2 ist seinerseits entlang der Längsachse 31 verschiebbar in einem Führungsteil 3 gelagert bzw. gehalten. Das Führungsteil 3 ist wiederum in einem mit dem nicht gezeigten Fahrzeugchassis fest verbundenen Halter 39 schwenkbar gelagert, wodurch eine Höhenverstellung der Lenkwelle 1 ermöglicht wird.

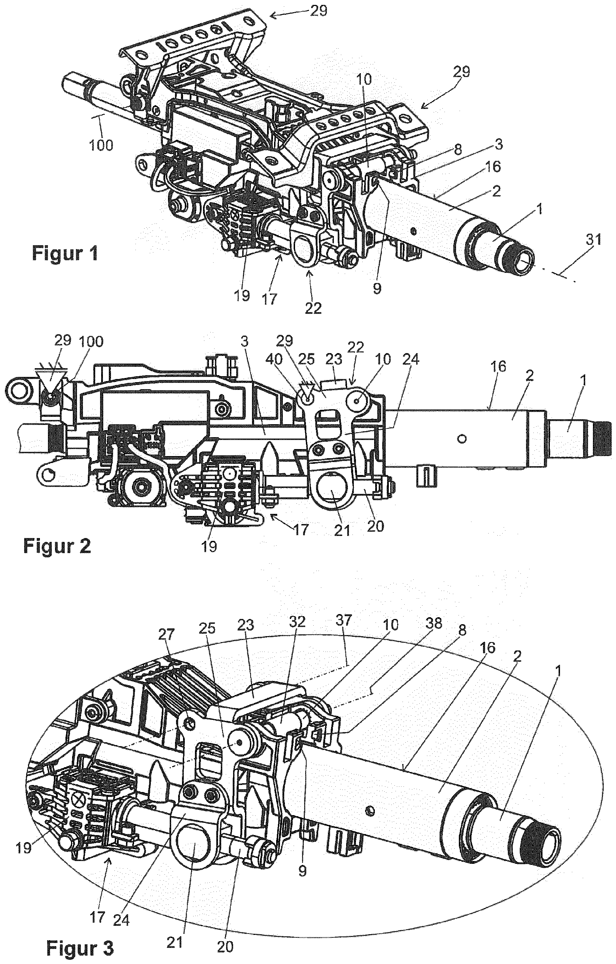

Für die Höhenverstellung ist ein elektrischer Höhenverstellantrieb 17 vorgesehen, der einen Elektromotor 18, ein Getriebe 19 und eine im Wesentlichen parallel zur Längsachse 31 angeordnete Spindel 20 aufweist, auf der eine Mutter 21 sitzt, die mit einem Schwenkhebel 22 verbunden ist. Bei Betätigung des Höhenverstellantriebs 17 wird die Drehzahl des Motors 18 im als Schnecken-Getriebe ausgebildetes Getriebe 19 untersetzt und die Spindel 20 rotatorisch angetriebenen. Auf der sich drehenden Spindel 20 verlagert sich die Mutter 21 translatorisch in Richtung der Achse der Spindel 20 nach vorne oder zurück. Der Schwenkhebel 22 besitzt einen Verbindungsabschnitt 24, der mit der Mutter 21 gekoppelt ist. Der Verbindungsabschnitt 24 geht in einen antriebsseitigen Schwenkabschnitt 25 über, der mit zwei zueinander beabstandeten Bohrungen 26, 27 versehen ist. Die lenkradseitige Bohrung 26 ist mittels einer Hebelachse 10 am Führungsteil 3 angelenkt. Die andere Bohrung 27 ist mittels eines Bolzens 40 am fahrzeugfesten Halter 29 angelenkt. In der Figur 2 ist der Halter 29 durch eine schematisierte Darstellung dargestellt, wobei die Kopplung zwischen dem Schwenkhebel 22 und dem Halter als Festlager dargestellt ist und die schwenkbare Anbringung um eine Achse 100 des Führungsteils 3 an dem Halter 29 als Loslager dargestellt ist. Die Loslagerung zwischen dem Führungsteil 3 und dem Halter 29 ist erforderlich, um einen Längenausgleich für die Höhenverstellung bereitzustellen, so dass sich das Führungsteil 3 gegenüber dem Halter 29 geringfügig in Richtung der Längsachse 31 verschieben kann.

Der antriebsseitige Schwenkabschnitt 25 des Schwenkhebels 22 geht in einen Brückenabschnitt 23 über, der das Führungsteil 3 und das Mantelrohr 2 überbrückt und seinerseits in einem gegenüberliegenden Schwenkabschnitt 28 überbegeht, der symmetrisch zum antriebseitigen Schwenkabschnitt 25 ausgebildet ist. Auch der gegenüberliegende Schwenkabschnitt 28 besitzt zwei Bohrungen 29, 30, wobei die Hebelachse 10, auch durch die lenkradseitige Bohrung 30 des gegenüberliegenden Schwenkabschnitts 28 hindurch geht. Die andere Bohrung 29 des gegenüberliegenden Schwenkabschnitts 28 ist wiederum mittels eines Bolzen 40 am Halter 39 angelenkt.

Wenn der Höhenverstellantrieb 17 die Mutter 21 in Richtung der Längsachse 31 nach vorne oder zurück verschiebt, schwenkt der Schwenkhebel 22 um eine feste Schwenkachse 37, die durch die Bohrungen 27, 29 geht und mittels der Bolzen 40 am fahrzeugfesten Halter 39 fixiert ist. Da die feste Schwenkachse 37 fixiert ist, bewegt sich die bewegliche Schwenkachse 38 nach oben oder unten und da der Schwenkhebel 32 mittels der durch seine Bohrungen 26, 30 gehenden Hebelachse 10 mit dem Führungsteil 3 verbunden ist, schwenkt dieser dabei das Führungsteil 3 um die Achse 100 nach oben oder unten, wodurch eine Höhenverstellung des Führungsteils 3 und des im Führungsteil 3 gelagerten Mantelrohrs 2 mit der Lenkwelle 1 erfolgt.

Der elektrische Längsverstellantrieb 4 weist ebenfalls einen Elektromotor 33 und ein Getriebe 34 auf, welches mit einer Spindel 35 verbunden ist. Auch auf der Spindel 35 sitzt eine Mutter, die innerhalb des Getriebs 34 angeordnet ist und mittels des Elektromotors 33 in Rotation versetzt wird und somit die Spindel 35 translatorisch in Richtung der Längsachse 31 verlagert wird. Die Spindel 35 ist mit einem Flansch 36 verbunden ist, der seinerseits mit dem Mantelrohr 2 verbunden ist. Wenn nun der Längsverstellantrieb 4 betätigt wird, wird die Drehzahl des Motors 33 im als Schneckengetriebe ausgebildeten Getriebe 34 untersetzt und die Mutter in Drehung versetzt. Daraufhin wird die Spindel 35 und der damit verbundene Flansch 36 parallel zur Längsachse 31 nach vorne oder nach hinten verschoben. Da der Flansch 36 mit dem Mantelrohr 2 in Verbindung steht, nimmt er das Mantelrohr 2 nach vorne oder nach hinten mit. Hierdurch wird eine Längsverstellung des Mantelrohrs 2 und der darin drehbar gelagerten Lenkwelle 1 ermöglicht.

Das Führungsteil 3 weist einen Schlitz 5 auf, der sich parallel zur Längsachse 31 erstreckt. Der Schlitz 5 liegt eine vorgegebene Schlitzbreite 6 und einen verbreitertem Endbereich 7, so dass der Schlitz 5 insgesamt etwa T-Förmig ausgestaltet ist. Der Endbereich 7 dient zur Veränderung der Elastizität des Führungsteils 3 im Bereich des Schlitzes 5. Die Schlitzbreite 6 wird durch zwei gegenüberliegende Flanken 8, 9 bestimmt. Der Schlitz 5 wird überspannt von der Hebelachse 10, die als Spannschraube ausgebildeter Spannbolzen 10 dient. Die Spannschraube 10 durchdringt zwei Bohrungen 41, 42, die am Führungsteil 3 zu beiden Seiten des Schlitzes 5 gegenüberliegend angeordnet sind. In den Bohrungen sind Buchsen 44 aus Messing eingesetzt. Die Spannschraube 10 wurde mittels einer Spannmutter 43 während der Montage der Lenksäule vorgespannt, wobei die Spannschraube 10 das Führungsteil 3 im Bereich des Schlitzes 5 zusammendrückt und die Schlitzbreite 6 verkleinert. Das Führungsteil 3 hat auf seiner dem Mantelrohr 2 zugewandten Innenseite acht Lagerflächen 11-15, die radial nach innen in Richtung Mantelrohr 2 vorragen und zur Lagerung des Mantelrohrs 2 dienen.

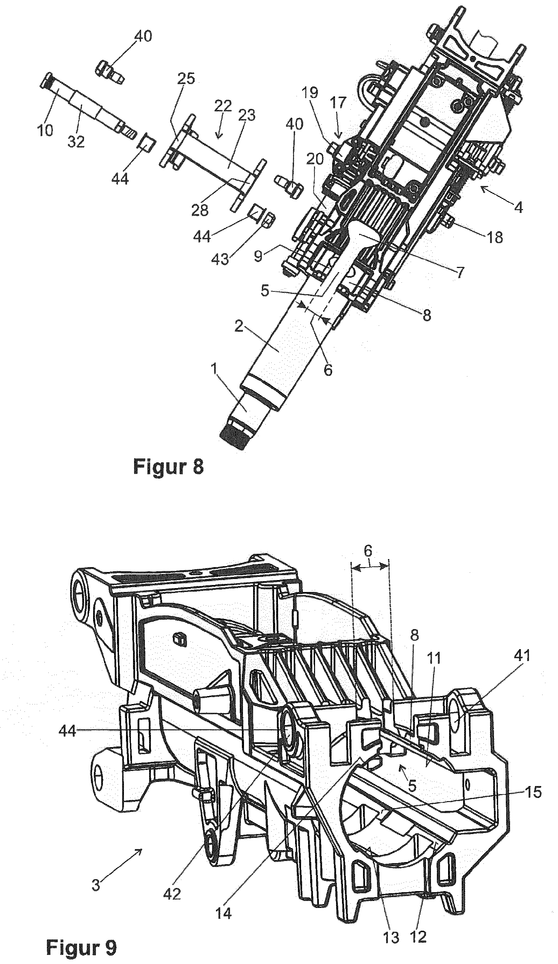

Wie man am besten in Figur 9 erkennt, sind vier Lagerflächen 11-14 in Umfangsrichtung jeweils in Abständen von etwa 90° zueinander angeordnet, so dass sie an der äußeren Mantelfläche 16 des Mantelrohrs 2 an vier Bereichen anliegen, wobei zwei Lagerflächen 11, 12 auf der rechten Seite des Schlitzes 5 und zwei andere Lagerflächen 13, 14 auf der linken Seite des Schlitzes 5 angeordnet sind. Die vier genannten Lagerflächen 11-14 sind im lenkradseitigen Endbereich des Führungsteils 3 angeordnet. In einem axialen Abstand vom lenkradseitigen Endbereich des Führungsteils 3 entfernt sind vier weitere Lagerflächen 15 angeordnet, von denen in der Figur 9 nur die eine Lagerfläche 15 sichtbar ist. Auch die Lagerfläche 15 und die drei nicht sichtbaren Lagerflächen sind umfangsmäßig in Abständen von etwa 90° zueinander verteilt und es liegen jeweils zwei Lagerflächen auf der rechten Seite des Schlitzes 5 und zwei andere Lagerflächen auf der linken Seite des Schlitzes 5.

Für die Montage des Mantelrohrs 2 im Führungsteil 3 ist die Schlitzbreite 6 ausreichend bemessen, so dass das Mantelrohr 2 mit einigem Spiel im Führungsteil 3 aufgenommen wird. Nach der Montage des Mantelrohrs 2 wird dann die Spannschraube 10 mit der Spannmutter 43 gespannt und dabei die Schlitzbreite 6 verringert, bis die Lagerflächen 11-15 ohne Spiel an der äußeren Mantelfläche 16 des Mantelrohrs 2 anliegen und eine vorbestimmte Verschiebekraft zwischen dem Mantelrohr 2 und dem Führungsteil 3 erreicht ist. Dabei ist darauf zu achten, dass das Mantelrohr 2 gegenüber dem Führungsteil 3 in Richtung der Längsachse 31 verschiebbar bleibt und die erforderliche Verschiebekraft im vorbestimmten Bereich liegt. Alternativ ist es denkbar und möglich, dass der Spannbolzen 10 nicht mittels einer Spannmutter 43 vorgespannt wird, sondern ein Endbereich des Spannbolzens während der Montage der Lenksäule verformt wird zur Ausbildung eines Kopfes mit einem größeren Durchmesser als der Durchmesser des Schaftes des Spannbolzens. Somit ist der Spannbolzen als Niet ausgebildet.

Auf der Spannschraube 10 ist eine Hülse 32 angeordnet, die sich quer zur Längsachse 31 über den Schlitz 5 erstreckt und dabei an den beiden den Schlitz 5 begrenzenden Flanken 8, 9 des Führungsteils 3 abgestützt ist. Durch diese Abstützung der Flanken 8, 9 an der Hülse 32 der Spannschraube 10 wird ein ungewolltes Lockern der spielarmen Führung zwischen Mantelrohr 2 und Führungsteil 3 gewährleistet, wenn im Crashfall auf die Lenkwelle 1 und das Mantelrohr 2 starke Kräfte einwirken, die mit einer radialen Kraftkomponente auf das Führungsteil 3 einwirken.

Die Erfindung ermöglicht somit die spielarme bis spielfreie Aufnahme des Mantelrohrs 2 im Führungsteil 3, wobei eine für die elektrische Höhenverstellung ohnehin vorhandene Hebelachse 10 auch als Spannschraube ausgebildeten Spannbolzen 10 Verwendung findet. Dadurch kann nicht nur eine separate Spannschraube eingespart werden, sondern auch die im Stand der Technik verwendeten elastischen Blattfedern und weitere Führungselemente, die zur spielfreien Lagerung beim Stand der Technik vorgesehen sind. Hierdurch wird der Aufwand für die Herstellung der erfindungsgemäßen Lenksäule und der erforderliche Bauraum verringert.

### BEZUGSZEICHENLISTE

- 1: Gelenkwelle
- 2: Mantelrohr
- 3: Führungsteil
- 4: Längsverstellungsantrieb
- 5: Schlitz
- 6: Schlitzbreite
- 7: Endbereich
- 8: Flanke
- 9: Flanke
- 10: Spannschraube / Hebelachse
- 11: Lagerfläche
- 12: Lagerfläche
- 13: Lagerfläche
- 14: Lagerfläche
- 15: Lagerfläche
- 16: Mantelfläche
- 17: Höhenverstellantrieb
- 18: Motor
- 19: Getriebe
- 20: Spindel
- 21: Mutter
- 22: Schwenkhebel
- 23: Brückenabschnitt
- 24: Verbindungsabschnitt
- 25: antriebsseitiger Schwenkabschnitt
- 26: Bohrung
- 27: Bohrung
- 28: gegenüberliegender Schwenkabschnitt
- 29: Bohrung
- 30: Bohrung
- 31: Längsachse
- 32: Hülse
- 33: Motor
- 34: Getriebe
- 35: Spindel
- 36: Flansch
- 37: feste Schwenkachse
- 38: bewegliche Schwenkachse
- 39: Halter
- 40: Bolzen
- 41: Bohrung
- 42: Bohrung
- 43: Spannmutter

## Patentansprüche

1. Lenksäule für ein Kraftfahrzeug, mit einem Mantelrohr (2) zur drehbaren Lagerung einer Lenkwelle (1) und mit einem das Mantelrohr (2) umgreifenden Führungsteil (3), in dem das Mantelrohr (2) mit seiner äußeren Mantelfläche (16) in einer Lagerfläche (11-15) des Führungsteils (3) in Richtung der Längsachse (31) der Lenkwelle (1) mittels eines motorischen Längsverstellantriebs (4) teleskopisch verschiebbar gelagert ist, wobei das Führungsteil (3) einen Schlitz (5) aufweist, dessen Schlitzbreite (6) mittels eines Spannbolzens (10) auf eine wählbaren Schlitzbreite (6) einstellbar ist, so dass ein Spiel oder eine vorgegebene Vorspannkraft (F) zwischen der Mantelfläche (16) und der lagernden Lagerfläche (11-15) des Führungsteils (3) eingestellt ist, **dadurch gekennzeichnet, dass** diese einen motorischen Höhenverstellantrieb (17) mit einem Schwenkhebel (22) aufweist, der mittels einer Hebelachse (10) am Führungsteil (3) angelenkt ist, und dass die Hebelachse (10) durch den Spannbolzen (10) gebildet ist.

2. Lenksäule nach Anspruch 1, **dadurch gekennzeichnet, dass** der Schlitz T-förmig oder L-förmig ausgestaltet ist.

3. Lenksäule nach einem der vorhergehenden Ansprüche, **dadurch gekennzeichnet, dass** sich der Schlitz (5) in Richtung der Längsachse (31) erstreckt.

4. Lenksäule nach einem der vorhergehenden Ansprüche, **dadurch gekennzeichnet, dass** das Führungsteil (3) mehrere radial nach innen vorragende Lagerflächen (11-15) zur Lagerung des Mantelrohrs (2) aufweist.

5. Lenksäule nach Anspruch 4, **dadurch gekennzeichnet, dass** drei oder vier Lagerflächen (11-14) in Umfangsrichtung im Abstand zueinander angeordnet sind.

6. Lenksäule nach Anspruch 4 oder 5, **dadurch gekennzeichnet, dass** mehrere Lagerflächen (12, 15) in Längsrichtung (31) im Abstand zueinander angeordnet sind.

7. Lenksäule nach einem der vorhergehenden Ansprüche, **dadurch gekennzeichnet, dass** auf dem Spannbolzen (10) eine Hülse (32) angeordnet ist, die sich quer über den Schlitz (5) erstreckt, und das zwei gegenüberliegende, den Schlitz (5) begrenzenden Flanken (8, 9) des Führungsteils (3) an der Hülse (32) abgestützt sind.

8. Lenksäule nach einem der vorhergehenden Ansprüche, **dadurch gekennzeichnet, dass** das Führungsteil (3) eine Bohrung (41, 42) umfasst, durch die sich der Spannbolzen (10) erstreckt, wobei in der Bohrung (41, 42) des Führungsteils (3) eine Buchse (44) angeordnet ist, wobei die Buchse (44) zwischen der Bohrung (41, 42) und dem Spannbolzen (10) angeordnet ist.

## Claims

1. A steering column for a motor vehicle, having a column jacket (2) for rotatably mounting a steering shaft (1), and having a guide part (3) which engages around the column jacket (2), in which the column jacket (2) is mounted with its outer lateral surface (16) in a bearing surface (11-15) of the guide part (3) such that it is telescopically displaceable in the direction of the longitudinal axis (31) of the steering shaft (1) by means of a motorized longitudinal adjustment drive (4), wherein the guide part (3) has a slot (5), the slot width (6) of which can be set by means of a clamping bolt (10) to a selectable slot width (6), such that a play or a predefined prestressing force (F) between the lateral surface (16) and the mounting bearing surface (11-15) of the guide part (3) is set, **characterized in that** it has a motorized height adjustment drive (17) with a pivoting lever (22) which is articulated on the guide part (3) by means of a lever axle (10), and **in that** the lever axle (10) is formed by the clamping bolt (10).

2. The steering column as claimed in claim 1, **characterized in that** the slot is of T-shaped or L-shaped configuration.

3. The steering column as claimed in one of the preceding claims, **characterized in that** the slot (5) extends in the direction of the longitudinal axis (31) .

4. The steering column as claimed in one of the preceding claims, **characterized in that** the guide part (3) has a plurality of bearing surfaces (11-15) which protrude radially to the inside for mounting the column jacket (2).

5. The steering column as claimed in claim 4, **characterized in that** three or four bearing surfaces (11-14) are arranged at a spacing from one another in the circumferential direction.

6. The steering column as claimed in claim 4 or 5, **characterized in that** a plurality of bearing surfaces (12, 15) are arranged at a spacing from one another in the longitudinal direction (31).

7. The steering column as claimed in one of the preceding claims, **characterized in that** a sleeve (32) is arranged on the clamping bolt (10), which sleeve (32) extends transversely over the slot (5), and the two flanks (8, 9) of the guide part (3) which lie opposite one another and delimit the slot (5) are supported on the sleeve (32).

8. The steering column as claimed in one of the preceding claims, **characterized in that** the guide part (3) comprises a bore (41, 42), through which the clamping bolt (10) extends, a bush (44) being arranged in the bore (41, 42) of the guide part (3), the bush (44) being arranged between the bore (41, 42) and the clamping bolt (10).

## Revendications

1. Colonne de direction pour un véhicule automobile, comprenant un tube d'enveloppe (2) pour le support sur palier rotatif d'un arbre de direction (1) et comprenant une partie de guidage (3) venant en prise autour du tube d'enveloppe (2), dans laquelle le tube d'enveloppe (2) est supporté de manière déplaçable télescopiquement avec sa surface d'enveloppe extérieure (16) dans une surface de palier (11-15) de la partie de guidage (3) dans la direction de l'axe longitudinal (31) de l'arbre de direction (1) au moyen d'un entraînement de déplacement longitudinal (4) motorisé, la partie de guidage (3) présentant une fente (5) dont la largeur de fente (6) peut être ajustée au moyen d'un goujon de serrage (10) à une largeur de fente sélectionnable (6), de telle sorte qu'un jeu ou une force de précontrainte prédéfinie (F) soit ajusté(e) entre la surface d'enveloppe (16) et la surface de palier supportante (11-15) de la partie de guidage (3), **caractérisée en ce que** celle-ci présente un entraînement de réglage en hauteur motorisé (17) avec un levier pivotant (22) qui est articulé au moyen d'un axe de levier (10) à la partie de guidage (3), et **en ce que** l'axe de levier (10) est formé par le goujon de serrage (10).

2. Colonne de direction selon la revendication 1, **caractérisée en ce que** la fente est configurée en forme de T ou de L.

3. Colonne de direction selon l'une quelconque des revendications précédentes, **caractérisée en ce que** la fente (5) s'étend dans la direction de l'axe longitudinal (31).

4. Colonne de direction selon l'une quelconque des revendications précédentes, **caractérisée en ce que** la partie de guidage (3) présente plusieurs surfaces de palier (11-15) saillant radialement vers l'intérieur pour le support sur palier du tube d'enveloppe (2).

5. Colonne de direction selon la revendication 4, **caractérisée en ce que** trois ou quatre surfaces de palier (11-14) sont disposées à distance les unes des autres dans la direction périphérique.

6. Colonne de direction selon la revendication 4 ou 5, **caractérisée en ce que** plusieurs surfaces de palier (12, 15) sont disposées à distance les unes des autres dans la direction longitudinale (31).

7. Colonne de direction selon l'une quelconque des revendications précédentes, **caractérisée en ce qu'**une douille (32) est disposée sur le goujon de serrage (10), laquelle s'étend transversalement à la fente (5), et **en ce que** deux flancs opposés (8, 9) de la partie de guidage (3), limitant la fente (5), sont supportés sur la douille (32).

8. Colonne de direction selon l'une quelconque des revendications précédentes, **caractérisée en ce que** la partie de guidage (3) comprend un alésage (41, 42) à travers lequel s'étend le goujon de serrage (10), un manchon (44) étant disposé dans l'alésage (41, 42) de la partie de guidage (3), le manchon (44) étant disposé entre l'alésage (41, 42) et le goujon de serrage (10).
